# EUROPEAN PATENT APPLICATION

(11) **EP 4 632 857 A1**
(43) Date of publication of application: **15.10.2025**
(21) Application number: 25165098.2
(22) Date of filing: 20.03.2025
(51) Int. Cl.: H01M 10/04, H01M 50/417, H01M 50/449

(54) **SECONDARY BATTERY**

(30) Priority: 08.04.2024 JP 2024062416
(71) Applicant: Prime Planet Energy & Solutions, Inc., Chuo-ku, Tokyo 103-0022 (JP)
(72) Inventor: MAEDA, Tomonori, Tokyo 103-0022 (JP); MATSUDA, Jo, Tokyo 103-0022 (JP)
(74) Representative: Kuhnen & Wacker Patent- und Rechtsanwaltsbüro PartG mbB

(57) **Abstract**

A secondary battery in which a problem in a conventional art is solved is provided. A secondary battery according to the present disclosure includes: a stacked-type electrode body that includes a plurality of first electrode plates, a plurality of second electrode plates, and a separator with a band-like shape; and a battery case. The separator includes a zigzag-bent part that is bent in a zigzag manner so that the separator is disposed between the first electrode plate and the second electrode plate, and a wound part that is wound to an outer periphery of a part where the first electrode plates, the second electrode plates, and the zigzag-bent part are stacked. The separator includes a start end part corresponding to an end part on one side in a longitudinal direction and a terminal end part corresponding to an end part on the other side. The terminal end part is positioned at a winding terminal end of the wound part. The zigzag-bent part includes a first bent part and a second bent part. The separator includes an extension part that is positioned on a side of the start end part relative to the zigzag-bent part, and disposed between the second bent part and the wound part. In the stacking direction of the first electrode plate and the second electrode plate, outer surfaces of both electrode plates that are positioned at the outermost surface sides are covered with the separator.

## Description

### TECHNICAL FIELD

The present disclosure relates to a secondary battery.

### BACKGROUND

As one mode of an electrode body included in a secondary battery, a stacked-type electrode body in which a plurality of positive electrodes and a plurality of negative electrodes are stacked alternately through a separator has been known. In one of the known modes of the stacked-type electrode body, the separator is disposed in a zigzag manner so as to exist between the positive electrode and the negative electrode (for example, see Patent Document 1). Patent Document 1 discloses various modes of the electrode body in which the separator is disposed in the zigzag manner.

### CITATION LIST

### PATENT DOCUMENTS

Patent Document 1: WO2019/064740

### SUMMARY

In recent years, an extension of the cruising distance of a battery electric vehicle (BEV) or the like has been demanded, and the size of a secondary battery mounted thereon has been enlarged. Enlarging the secondary battery results in increase in weight of an electrode body. When the weight of the electrode body is increased, suppressing the damage of the electrode due to the impact, the vibration, or the like at the time of manufacture is demanded more from a viewpoint of the reliability of the secondary battery.

In view of the above, the present disclosure provides a secondary battery in which the problem of the conventional art is solved.

A secondary battery according to the present disclosure includes: a stacked-type electrode body that includes a plurality of first electrode plates, a plurality of second electrode plates with a polarity different from a polarity of the first electrode plates, and a separator with a band-like shape; and a battery case that accommodates the stacked-type electrode body. The separator includes a zigzag-bent part that is bent in a zigzag manner so that the separator is disposed between the first electrode plate and the second electrode plate, and a wound part that is wound to an outer periphery of a part where the first electrode plates, the second electrode plates, and the zigzag-bent part of the separator are stacked. The separator includes a start end part corresponding to an end part of the separator on one side in a longitudinal direction and a terminal end part corresponding to an end part on the other side. The terminal end part is positioned at a winding terminal end of the wound part. The zigzag-bent part includes a first bent part that is disposed on one side in a direction perpendicular to a stacking direction of the first electrode plate and the second electrode plate, and a second bent part that is disposed on the other side in the direction perpendicular to the stacking direction of the first electrode plate and the second electrode plate. The separator includes an extension part that is positioned on a side of the start end part relative to the zigzag-bent part, and disposed between the second bent part and the wound part. In the stacking direction of the plurality of first electrode plates and the plurality of second electrode plates, an outer surface of one electrode plate of the plurality of first electrode plates and the plurality of second electrode plates that is positioned at one outermost surface side is covered with the separator, and an outer surface of the other electrode plate that is positioned at the other outermost surface side is also covered with the separator.

With such a structure, a secondary battery in which the problem in the conventional art is solved can be provided. That is to say, with such a structure, a secondary battery in which the damage of an electrode due to the impact or vibration at the time of manufacture is suppressed at a high level can be provided.

### BRIEF DESCRIPTION OF THE DRAWINGS

FIG. 1 is a perspective view schematically illustrating a secondary battery according to one embodiment corresponding to one example of a secondary battery according to the present disclosure;
FIG. 2 is a perspective view in which the secondary battery in FIG. 1 is inverted in an up-down direction;
FIG. 3 is a cross-sectional view schematically illustrating an internal structure of the secondary battery in FIG. 1, which is taken along a main surface of a battery case of the secondary battery;
FIG. 4 is a perspective view of the secondary battery in FIG. 1, which is schematically illustrated through a case main body;
FIG. 5 is a cross-sectional view schematically illustrating a structure of an electrode body of the secondary battery in FIG. 1;
FIG. 6 is a cross-sectional view schematically illustrating an internal structure of the secondary battery in FIG. 1, which is perpendicular to a long side surface of the battery case of the secondary battery and perpendicular to a bottom surface thereof;
FIG. 7 is a developed view of an insulating sheet used in the secondary battery in FIG. 1; and
FIG. 8 is a diagram of the insulating sheet used in the secondary battery in FIG. 1 viewed from a direction of the bottom surface of the battery case of the secondary battery.

### DETAILED DESCRIPTION

Embodiments of the present disclosure will hereinafter be described with reference to the drawings. Matters that are not mentioned in the present specification and that are necessary for the implementation of the present disclosure can be grasped as design matters of those skilled in the art based on the prior art in the relevant field. The present disclosure can be implemented on the basis of the contents disclosed in the present specification and common technical knowledge in the relevant field. It should be noted that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges accompanying with the lithium ions between positive and negative electrodes.

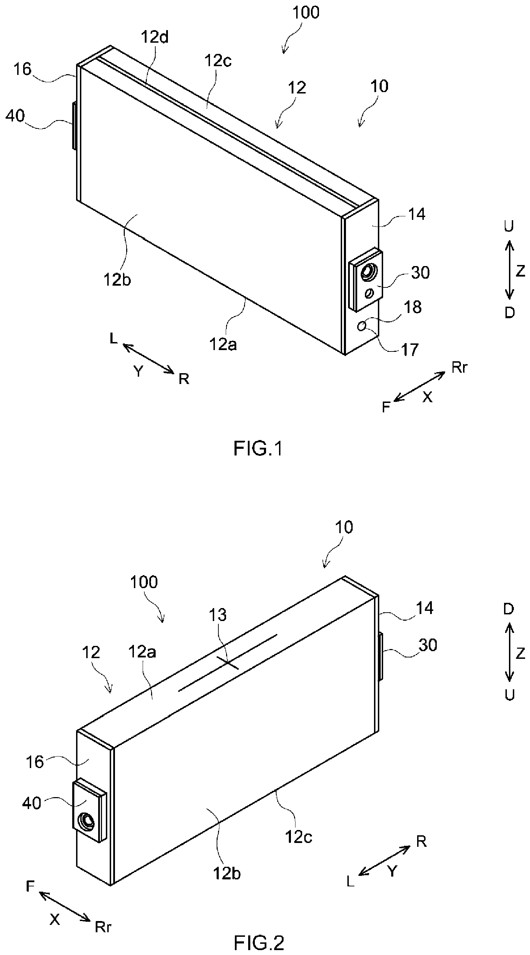

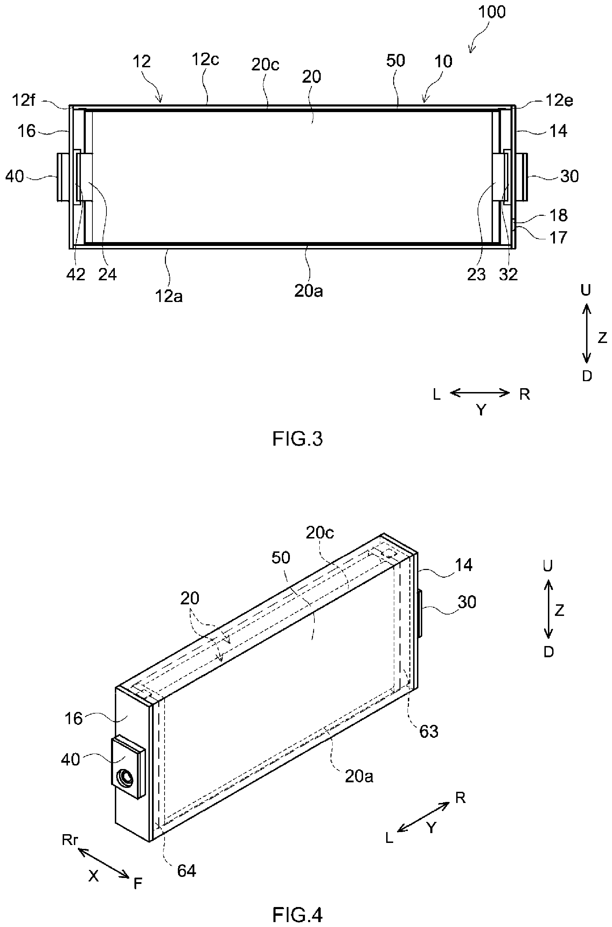

FIG. 1 is a perspective view of a secondary battery 100 according to this embodiment corresponding to one example of a secondary battery according to the present disclosure. FIG. 2 is a perspective view in which the secondary battery 100 in FIG. 1 is inverted in an up-down direction. FIG. 3 illustrates an internal structure of the secondary battery 100 in FIG. 1. It should be noted that in the following description, reference signs L, R, F, Rr, U, and D in the drawings respectively denote left, right, front, rear, up, and down, and reference signs X, Y, and Z in the drawings respectively denote a short side direction of the secondary battery 100, a long side direction that is orthogonal to the short side direction, and an up-down direction that is orthogonal to the short side direction and the long side direction.

It should be noted that U (up) and D (down) in the drawing coincide with up and down in a mode where the secondary battery 100 is normally used (in particular, installation state of an on-vehicle battery); however, the use mode of the secondary battery 100 is not limited to this. For example, in another embodiment, the secondary battery 100 may be installed upside down.

The secondary battery 100 according to this embodiment is a lithium ion secondary battery. Thus, the secondary battery 100 can have excellent battery characteristics such as high energy density and high capacity. In another embodiment, however, the secondary battery may be a secondary battery other than the lithium ion secondary battery (for example, sodium ion secondary battery or the like).

As illustrated in FIG. 1 to FIG. 3, the secondary battery 100 includes a battery case 10 and an electrode body 20. Moreover, the secondary battery 100 further includes a positive electrode terminal 30, a negative electrode terminal 40, an insulating sheet 50, and an electrolyte solution (not illustrated).

### <Battery case>

The battery case 10 is a housing that accommodates the electrode body 20 and the electrolyte solution. As illustrated in FIG. 1 and FIG. 2, the battery case 10 has an outer shape that is a flat bottomed cuboid shape here. That is to say, the battery case 10 has a square shape. Therefore, the secondary battery 100 in the illustrated example is a square type lithium ion secondary battery. However, the shape of the battery case 10 is not limited to this shape. The battery case 10 is desirably square because the space efficiency becomes high when a battery module is formed using a plurality of the secondary batteries 100.

The material of the battery case 10 may be the same as the conventionally used material (for example, metal, resin, or the like) without particular limitations. The material of the battery case 10 is desirably metal, and more desirably aluminum, an aluminum alloy, iron, or an iron alloy from the viewpoints of strength, thermal conductivity, and the like. It should be noted that the battery case 10 may be formed of a laminate film.

As illustrated in FIG. 1 to FIG. 3, the battery case 10 includes a case main body 12, a first sealing plate 14, and a second sealing plate 16. The case main body 12 has a rectangular tubular shape. As illustrated in FIG. 3, the case main body 12 includes a first opening 12e at one end part and a second opening 12f at the other end part. The first sealing plate 14 seals the first opening 12e and the second sealing plate 16 seals the second opening 12f. The battery case 10 is integrated in such a way that the first sealing plate 14 and the second sealing plate 16 are joined (for example, joined by welding) to the case main body 12 at the first opening 12e and the second opening 12f, respectively. The battery case 10 is hermetically sealed. Therefore, the secondary battery 100 is a sealed type battery.

The battery case 10 includes a pair of first surfaces, a pair of second surfaces, and a pair of third surfaces. As illustrated in FIG. 1, the case main body 12 includes a bottom surface 12a with a substantially rectangular shape, a pair of long side surfaces 12b extending from long sides of the bottom surface 12a and facing each other, and a top surface 12c connecting upper end parts of the pair of long side surfaces 12b. The top surface 12c has a substantially rectangular shape. The top surface 12c faces the bottom surface 12a. Here, the top surface 12c and the bottom surface 12a constitute the pair of first surfaces, and the pair of long side surfaces 12b constitute the pair of second surfaces. It should be noted that the area of the long side surface 12b is desirably larger than the area of the bottom surface 12a and larger than the area of the top surface 12c. For example, the bottom surface 12a and the top surface 12c can constitute the pair of short side surfaces. The case main body 12 is formed by, for example, bending one sheet of metal plate into a tubular shape and joining (for example, joining by welding) a joint. In the illustrated example, a welding joining part 12d exists on the top surface 12c. It should be noted that the welding joining part 12d may exist at the bottom surface 12a or at the long side surface 12b.

As illustrated in FIG. 2, the bottom surface 12a of the case main body 12 includes a gas exhaust valve 13. The gas exhaust valve 13 is configured to fracture when pressure inside the battery case 10 reaches a predetermined value or more and discharge a gas in the battery case 10 to the outside. It should be noted that although one gas exhaust valve 13 is provided in this embodiment, two or more gas exhaust valves 13 may be provided. Moreover, although the gas exhaust valve 13 is provided on the bottom surface 12a in this embodiment, the present disclosure is not limited to this example. The gas exhaust valve 13 may be provided on other surface than the bottom surface 12a, for example the long side surface 12b, the top surface 12c, the sealing plate 14, or the like in another embodiment. Alternatively, in another embodiment, the secondary battery 100 may be installed inversely in the up-down direction relative to the arrangement in the drawing and the gas exhaust valve may face upward by switching the bottom surface 12a and the top surface 12c. The area of the gas exhaust valve 13 may be determined arbitrarily.

In this embodiment, the gas exhaust valve 13 is a cross-shaped notch. However, the shape of the gas exhaust valve 13 is not limited in particular. In another embodiment, the gas exhaust valve 13 may be, for example, a linear (only longitudinal line or lateral line) notch, a conventionally known elliptical valve (with a notch inside) or circular valve (with a notch inside), or the like. The size (for example, length, depth, or the like) of the notch is arbitrarily set and can be determined as appropriate in consideration of the pressure resistance or the like of the battery case 10, for example.

The first sealing plate 14 and the second sealing plate 16 are plate-shaped members that seal the first opening 12e and the second opening 12f of the case main body 12. The first sealing plate 14 and the second sealing plate 16 have a substantially rectangular shape in a plan view. Here, the first sealing plate 14 and the second sealing plate 16 constitute the pair of third surfaces.

The first sealing plate 14 includes a liquid injection hole 17. The liquid injection hole 17 is used to inject the electrolyte solution into the battery case 10 after the first sealing plate 14 and the second sealing plate 16 are assembled to the case main body 12. Although the liquid injection hole 17 is provided below the positive electrode terminal 30, the position where the liquid injection hole 17 is provided at the first sealing plate 14 is not limited to this position. The liquid injection hole 17 is sealed with a sealing member 18 after the electrolyte solution is injected. It should be noted that although the liquid injection hole 17 is provided at the first sealing plate 14 in this embodiment, the liquid injection hole 17 may alternatively be provided at the second sealing plate 16 or the case main body 12. In addition, although the liquid injection hole 17 is provided on a surface different from that of the gas exhaust valve 13 in this embodiment, the liquid injection hole 17 may alternatively be provided on the same surface as that of the gas exhaust valve 13.

### <Electrode terminal>

The positive electrode terminal 30 and the negative electrode terminal 40 are fixed to the battery case 10. The positive electrode terminal 30 and the negative electrode terminal 40 are fixed to surfaces of the battery case 10 facing each other here. Specifically, the positive electrode terminal 30 is attached to the first sealing plate 14 and the negative electrode terminal 40 is attached to the second sealing plate 16.

Specifically, the first sealing plate 14 and the second sealing plate 16 have penetration holes to which insulating members 63 and 64 are attached, respectively. The positive electrode terminal 30 is attached to the first sealing plate 14 through the insulating member 63 and the positive electrode terminal 30 is insulated from the first sealing plate 14. The negative electrode terminal 40 is attached to the second sealing plate 16 through the insulating member 64 and the negative electrode terminal 40 is insulated from the second sealing plate 16. The insulating member 63 insulates the first sealing plate 14 and the electrode body 20 inside the battery case 10. The insulating member 64 insulates the second sealing plate 16 and the electrode body 20 inside the battery case 10.

It should be noted that although the positive electrode terminal 30 and the negative electrode terminal 40 are provided at the first sealing plate 14 and the second sealing plate 16, respectively in this embodiment, the arrangement of the positive electrode terminal 30 and the negative electrode terminal 40 is not limited to this example. In another embodiment, both the positive electrode terminal 30 and the negative electrode terminal 40 may be provided at one of the first sealing plate 14 and the second sealing plate 16. The positive electrode terminal 30 and the negative electrode terminal 40 may be provided at the case main body 12. In addition, although the positive electrode terminal 30 and the negative electrode terminal 40 are provided on the surfaces different from that of the gas exhaust valve 13 in this embodiment, the positive electrode terminal 30 and the negative electrode terminal 40 may alternatively be provided on the same surface as that of the gas exhaust valve 13.

However, in the case of providing the positive electrode terminal 30 and the negative electrode terminal 40 at the first sealing plate 14 and the second sealing plate 16, respectively as described in this embodiment, the height of the secondary battery 100 (that is, the size in the Z direction in the drawing) can be reduced and the battery with the high volume energy density can be easily obtained. In this case, it is easy to configure the battery module with the high volume energy density particularly in the application for the vehicle.

The positive electrode terminal 30 and the negative electrode terminal 40 are exposed to outer surfaces of the first sealing plate 14 and the second sealing plate 16, respectively. Here, the positive electrode terminal 30 and the negative electrode terminal 40 are disposed on an axial line extending in the long side direction Y and passing centers of the first sealing plate 14 and the second sealing plate 16. However, the axial line may alternatively deviate from the centers of the first sealing plate 14 and the second sealing plate 16 to, for example, the short side direction X in another embodiment. Further alternatively, the positive electrode terminal 30 and the negative electrode terminal 40 may be disposed off the axial line. For example, one of the positive electrode terminal 30 and the negative electrode terminal 40 may deviate to one side in the short side direction X and the other may deviate to the other side in the short side direction X.

The positive electrode terminal 30 is desirably made of metal and more desirably made of aluminum or an aluminum alloy. The negative electrode terminal 40 is desirably made of metal and more desirably made of copper or a copper alloy.

The electrode body 20 includes, at one end part, positive electrode current collection tabs electrically connected to a positive electrode 23 and the positive electrode current collection tabs are collectively attached to a positive electrode current collection member 32. The electrode body 20 includes, at the other end part, negative electrode current collection tabs electrically connected to a negative electrode 24 and the negative electrode current collection tabs are collectively attached to a negative electrode current collection member 42. Inside the battery case 10, the positive electrode current collection member 32 is attached to the first sealing plate 14 and is electrically connected to the positive electrode terminal 30. Inside the battery case 10, the negative electrode current collection member 42 is attached to the second sealing plate 16 and is electrically connected to the negative electrode terminal 40.

In this manner, the positive electrode terminal 30 is electrically connected to the positive electrode 23 of the electrode body 20 through the positive electrode current collection tabs and the positive electrode current collection member 32 inside the battery case 10. The negative electrode terminal 40 is electrically connected to the negative electrode 24 of the electrode body 20 through the negative electrode current collection tabs and the negative electrode current collection member 42 inside the battery case 10. It should be noted that the structure of electrically connecting the positive electrode terminal 30 and the negative electrode terminal 40 respectively to the positive electrode 23 and the negative electrode 24 of the electrode body 20 is not limited to the illustrated one.

### <Electrode body>

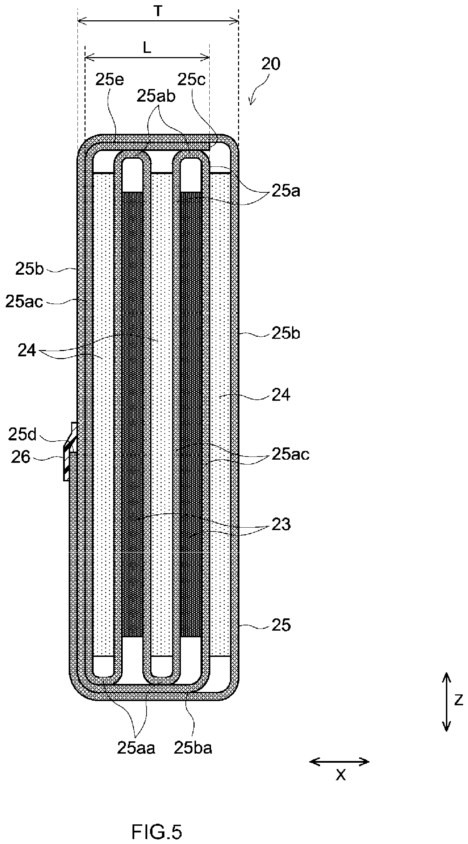

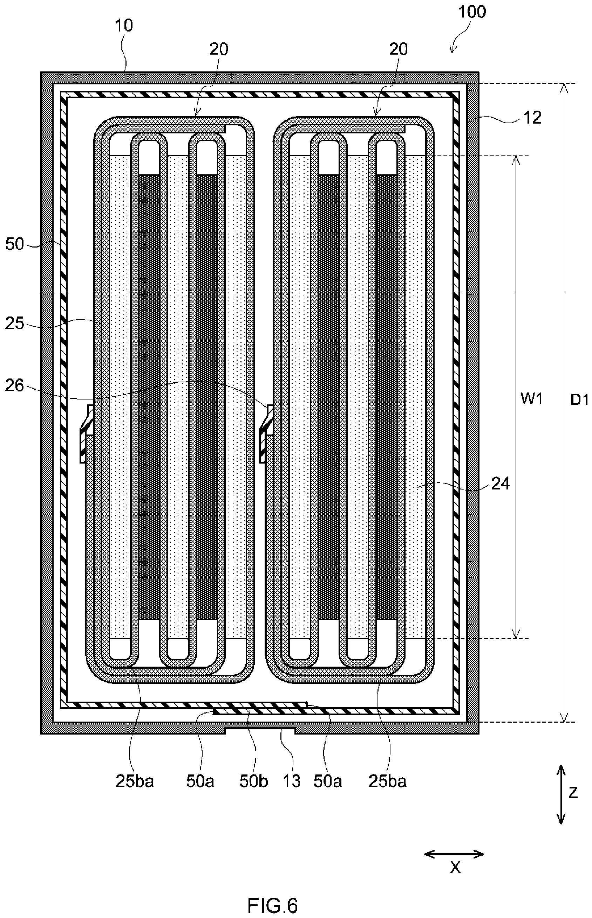

The electrode body 20 is accommodated inside the battery case 10. FIG. 4 is a perspective view of the secondary battery 100, which is schematically illustrated through the case main body 12. FIG. 5 is a schematic cross-sectional view of the electrode body 20 taken along the thickness direction of the electrode body 20. FIG. 6 is a schematic cross-sectional view of the electrode body 20, in which the internal structure of the battery case 10 is simplified, which is taken along the X direction (the thickness direction of the electrode body 20, in other words, a direction where the positive electrode 23 and the negative electrode 24 are stacked) and the Z direction in FIG. 1. FIG. 6 is a cross-sectional view of a cross section of the case main body 12 that is parallel to the first opening 12e.

As illustrated in FIG. 4 and FIG. 6, the electrode body 20 is disposed inside the battery case 10 while being covered with the insulating sheet 50 to be described below. In this embodiment, a plurality of the electrode bodies 20 are accommodated in one battery case 10. In the example illustrated in FIG. 4 and FIG. 6, two electrode bodies 20 are accommodated in one battery case 10. In the case where the plurality of electrode bodies 20 exist in this manner, it is possible to form a flow channel for the electrolyte solution or generated gas between the electrode body 20 and the adjacent electrode body 20. It should be noted that the number of electrode bodies 20 to be accommodated in one battery case 10 is not limited in particular. In another embodiment, the number of electrode bodies 20 to be accommodated in one battery case 10 may be three or more, or one.

The electrode body 20 includes a plurality of the negative electrodes 24 as first electrode plates (negative electrode plates 24), a plurality of the positive electrodes 23 as second electrode plates (positive electrode plates 23) with a polarity different from that of the first electrode plates, and one separator 25. Thus, in this embodiment, the electrode body 20 is a stacked-type electrode body, in which the positive electrodes 23 and the negative electrodes 24 are stacked alternately. One separator 25 is disposed between the plurality of positive electrodes 23 and the plurality of negative electrodes 24, and accordingly insulates the positive electrodes 23 and the negative electrodes 24. It should be noted that, in another embodiment, the second electrode plate may be configured as the negative electrode 24 and the first electrode plate may be configured as the positive electrode 23. The electrode body 20 is the stacked-type electrode body and the impregnation with the electrolyte solution is higher than that of a wound electrode body, and in particular, the electrode body 20 is advantageous in terms of a liquid injection property of the electrolyte solution at the manufacture. In addition, by the stacked-type electrode body, a battery with high volume energy density is easily configured.

FIG. 5 illustrates an example of the two positive electrodes 23 and the three negative electrodes 24. However, the number of positive electrodes 23 and negative electrodes 24 is not limited in particular and can be determined as appropriate in accordance with the battery design. In the illustrated example, the number of negative electrodes 24 is one more than the number of positive electrodes 23. Therefore, in the electrode multilayer structure of the positive electrodes 23 and the negative electrodes 24, the outermost layers are the negative electrodes 24 on both sides. In this case, lithium contained in a positive electrode active material of the positive electrode 23 can be used sufficiently and moreover, the precipitation of lithium in the negative electrode 24 can be prevented at a high degree. It should be noted that in another embodiment, the number of positive electrodes 23 and the number of negative electrodes 24 may be the same or the number of positive electrodes 23 may be larger than the number of negative electrodes 24. It should be noted that for example, 20 or more of the positive electrodes 23 and 20 or more of the negative electrodes 24 may be provided.

In this embodiment, the size of the negative electrode 24 is larger than the size of the positive electrode 23. In FIG. 5, the width of the negative electrode 24 (that is, the size in the Z direction in the drawing) is larger than the width of the positive electrode 23. Thus, the precipitation of lithium in the negative electrode 24 can be prevented at a high degree. It should be noted that in another embodiment, the width of the negative electrode 24 may be the same as or smaller than the width of the positive electrode 23.

The electrode body 20 has a substantially cubic shape. As illustrated in FIG. 3 and FIG. 4, the electrode body 20 includes a first side surface 20a facing the bottom surface 12a of the case main body 12. The electrode body 20 includes a second side surface 20c facing the top surface 12c of the case main body 12. The first side surface 20a and the second side surface 20c are a pair of side surfaces that face each other. Additionally, the electrode body 20 includes a pair of main surfaces facing the pair of long side surfaces 12b of the case main body 12. The electrode body 20 includes a pair of side surfaces facing the first sealing plate 14 and the second sealing plate 16.

The separator 25 has a band-like shape. That is to say, the separator 25 has an elongated shape. The separator 25 includes a zigzag-bent part 25a that is bent in a zigzag manner so that the separator 25 is disposed between the positive electrode 23 and the negative electrode 24. In this zigzag-bent part 25a, the separator 25 is folded alternately at end parts of the positive electrodes 23 and end parts of the negative electrodes 24. Therefore, the zigzag-bent part 25a includes a first bent part 25aa that is folded at the end part of the negative electrode 24 and a second bent part 25ab that is folded at the end part of the positive electrode 23. The first bent part 25aa is disposed on one side in a direction perpendicular to the stacking direction of the positive electrode 23 and the negative electrode 24, and the second bent part 25ab is disposed on the other side in the direction perpendicular to the stacking direction of the positive electrode 23 and the negative electrode 24. In the illustrated example, the first bent part 25aa faces the bottom surface 12a of the case main body 12 and the second bent part 25ab faces the top surface 12c of the case main body 12. However, the first bent part 25aa may face the top surface 12c of the case main body 12 and the second bent part 25ab may face the bottom surface 12a of the case main body 12.

In the illustrated example, the first bent part 25aa is apart from an end surface of the negative electrode 24. Thus, there is a distance between the end surface of the negative electrode 24 and the first bent part 25aa. However, the first bent part 25aa may be in contact with the end surface of the negative electrode 24 along the end part of the negative electrode 24.

Similarly, in the illustrated example, the second bent part 25ab is apart from an end surface of the positive electrode 23. Thus, there is a distance between the end surface of the positive electrode 23 and the second bent part 25ab. However, the second bent part 25ab may be in contact with the end surface of the positive electrode 23 along the end part of the positive electrode 23.

Moreover, the zigzag-bent part 25a includes a flat part 25ac that is held between the positive electrode 23 and the negative electrode 24. In addition, the zigzag-bent part 25a includes the flat part 25ac also on the outermost surface of the negative electrode 24 that is the outermost layer where the zigzag-bent part 25a starts. In this manner, each of the plurality of positive electrodes 23 is held between the flat parts 25ac of the separator 25, and each of the plurality of negative electrodes 24 is held between the flat parts 25ac of the separator 25. Thus, the adjacent positive electrode 23 and negative electrode 24 are insulated from each other by the flat part 25ac. It should be noted that it is not necessary that all of the positive electrodes 23 and the negative electrodes 24 be held between the flat parts 25ac of the zigzag-bent part 25a. For example, the zigzag bending may start in a state where the separator 25 is held between the positive electrode 23 and the negative electrode 24, and thus, the flat part 25ac may be unnecessary on the outermost surface of the negative electrode 24 that is the outermost layer where the zigzag-bent part 25a starts. However, from the viewpoint of protecting the negative electrode 24, the outermost surface of the negative electrode 24 that is the outermost layer where the zigzag-bent part 25a starts is desirably covered with the flat part 25ac. By allowing the separator 25 to be bent in the zigzag manner, the manufacturing efficiency of the stacked-type electrode body can be increased.

In addition, the separator 25 includes a wound part 25b that is wound to an outer periphery of a part where the positive electrodes 23, the negative electrodes 24, and the zigzag-bent part 25a (more specifically, flat parts 25ac) are stacked. By the wound part 25b, the separator 25 surely covers the outermost surface of one electrode and the outermost surface of the other electrode that are positioned on the outermost layers in the electrode multilayer structure of the positive electrodes 23 and the negative electrodes 24. Thus, the mixing of a foreign substance into the electrode body 20 or the generation of the foreign substance in the electrode body 20 can be suppressed.

In addition, the separator 25 includes a first end part 25c corresponding to an end part of the separator 25 on one side in a longitudinal direction, and a second end part 25d corresponding to an end part on the other side. The first end part 25c is a start end part; thus, the first end part 25c continues to the zigzag-bent part 25a and is positioned inside the wound part 25b (in other words, on an inner peripheral side). The second end part 25d is a terminal end part; thus, the second end part 25d is positioned at a winding terminal end of the wound part 25b.

The position of the second end part 25d corresponding to the terminal end part is not limited in particular. As shown in the illustrated example, the second end part 25d may be positioned on the main surface of the electrode plate (in the illustrated example, the negative electrode 24) on the outermost layer of the electrode multilayer structure of the positive electrodes 23 and the negative electrodes 24, or may be positioned at the side surface of the electrode multilayer structure. The second end part 25d corresponding to the terminal end part is desirably fixed by the tape. In the illustrated example, the second end part 25d is fixed by a winding fastening tape 26. It should be noted that the second end part 25d may be fixed together with a part of the separator 25 on the inner peripheral side by an adhesive, press-bonding, thermal welding, or the like.

As illustrated in FIG. 6, when the plurality of electrode bodies 20 are disposed in the battery case 10, at least one winding fastening tape 26 is desirably disposed between the plurality of electrode bodies 20. In the case of the plurality of electrode bodies 20, the adjacent electrode bodies 20 may be either in contact with or apart from each other.

As illustrated in FIG. 5, the separator 25 includes an extension part 25e that is positioned on a side of the start end part 25c relative to the zigzag-bent part 25a, and disposed between the second bent part 25ab and the wound part 25b. This extension part 25e functions as a cushion against the vibration or impact at the time of manufacture. Thus, this extension part 25e can suppress the damage of the electrode due to the vibration or impact at the time of manufacture. Moreover, in a case of occurrence of the thermal contraction of the separator 25, the exposure of the electrode in a vicinity of the first end part 25c (start end part) due to the thermal contraction of the separator 25 can be suppressed.

Here, as the extension part 25e becomes longer, more electrodes can have their end parts protected. Specifically, illustrated in FIG. 5, the thickness of the electrode body 20 is referred to as T. The length of the extension part 25e of the separator 25 in the stacking direction of the positive electrode 23 and the negative electrode 24 is referred to as L. A ratio (L/T) of L to T is desirably 0.1 to 0.9, more desirably 0.1 to 0.7, and still more desirably 0.2 to 0.6. It should be noted that the thickness T of the electrode body 20 is the distance between the layers of the separator 25 existing on the outermost layers in the stacking direction of the positive electrode 23 and the negative electrode 24. Thus, the thickness T of the electrode body 20 excludes the thickness of the winding fastening tape 26.

The extension part 25e of the separator 25 desirably covers at least one second bent part 25ab. The extension part 25e of the separator 25 desirably faces an end surface of at least one negative electrode 24. The number of negative electrodes 24 stacked in the electrode body 20 is referred to as N. The extension part 25e of the separator 25 desirably faces end surfaces of the 0.1N or more negative electrodes 24, and more desirably faces end surfaces of the 0.2N or more negative electrodes 24. Moreover, the extension part 25e of the separator 25 desirably faces end surfaces of the five or more negative electrodes 24 (in other words, the extension part 25e of the separator 25 desirably covers at least five second bent parts 25ab). On the other hand, the extension part 25e of the separator 25 desirably faces end surfaces of the 0.9N or less negative electrodes 24, and more desirably faces end surfaces of the 0.7N or less negative electrodes 24. It should be noted that for example, when the number of stacked negative electrodes 24 is 20 (that is, N = 20), 0.1N is two.

The position of the first end part 25c corresponding to the start end part is normally determined in accordance with the length of the extension part 25e of the separator 25. In the example illustrated in FIG. 5, the first end part 25c is positioned at the side surface of the electrode multilayer structure of the positive electrode 23 and the negative electrode 24. However, the first end part 25c may be positioned at the main surface of the electrode on the outermost layer of the electrode multilayer structure. In this case, the extension part 25e of the separator 25 covers all of the second bent parts 25ab (that is, covers the side surface of the electrode multilayer structure of the positive electrodes 23 and the negative electrodes 24), and additionally covers at least a part of the main surface of the negative electrode 24 on the outermost layer (the negative electrode 24 on the right side in FIG. 5, that is, the negative electrode 24 on the outermost layer opposite to the negative electrode 24 where the zigzag bending starts).

The separator 25 is porous, which will be described below; therefore, the electrolyte solution can be kept in pores. In the illustrated example, the extension part 25e of the separator 25 exists on the top surface 12c side of the case main body 12 (that is, on the upper side in a normally used state). Thus, the extension part 25e of the separator 25 can keep the electrolyte solution above the positive electrode 23 and the negative electrode 24 of the electrode body 20. Therefore, it is advantageous that the extension part 25e of the separator 25 is long from the viewpoint of supplying the electrolyte solution above the electrode body 20.

Since the first end part 25c corresponding to the start end part is positioned inside the wound part 25b, the first end part 25c does not need to be fixed by a tape or the like. The tape generates a step difference in the electrode body 20 and may cause lithium precipitation. When the first end part 25c is not fixed by the tape, the lithium precipitation can be suppressed. For example, the first end part 25c is fixed by being held between the wound part 25b and the multilayer part of the positive electrode 23, the negative electrode 24, and the zigzag-bent part 25a. Alternatively, for example, when the separator 25 includes an adhesive layer, the first end part 25c is fixed by this adhesive layer.

Similarly, the extension part 25e of the separator 25 does not need to be fixed by a tape or the like. When the extension part 25e is not fixed by the tape, the lithium precipitation can be suppressed. For example, the extension part 25e is fixed by being held between the wound part 25b and the multilayer part of the positive electrode 23, the negative electrode 24, and the zigzag-bent part 25a. Alternatively, for example, when the separator 25 includes an adhesive layer, the extension part 25e is fixed by this adhesive layer.

In this embodiment, in the stacking direction of the positive electrode 23 and the negative electrode 24 (the Z direction in the drawing), an outer surface of one electrode of the positive electrode 23 and the negative electrode 24 that is positioned at one outermost surface side is covered with the separator 25, and an outer surface of the other electrode that is positioned at the other outermost surface side is also covered with the separator 25. That is to say, in the electrode body 20, in the electrode multilayer structure of the positive electrode 23 and the negative electrode 24, the outer surfaces of both the outermost layers are covered with the separator 25. These outer surfaces are typically covered with at least the wound part 25b of the separator 25. In the illustrated example, in the electrode multilayer structure, both the outermost layers are the negative electrodes 24. One negative electrode 24 on the side where the zigzag bending of the separator 25 starts (the negative electrode 24 on the left side in FIG. 5) is covered with the flat part 25ac and the wound part 25b of the separator 25. The other negative electrode 24 (the negative electrode 24 on the right side in FIG. 5) is covered with the wound part 25b of the separator 25. As described above, when the outer surfaces of the electrodes on both the outermost layers are covered with the separator 25, the damage of the electrodes on both the outermost layers due to the impact, the vibration, or the like at the time of manufacture can be suppressed.

In the electrode body 20, the surfaces other than the surface where the electrode current collection tab (that is, the positive electrode current collection tab or the negative electrode current collection tab) protrudes are desirably covered with the separator 25. Moreover, on the surface where the electrode current collection tab protrudes, a part other than the electrode current collection tab may be covered with the separator 25.

In the illustrated example, outside the first bent part 25aa of the separator 25, a separator overlap part 25ba where the wound part 25b overlaps twice or more (that is, two or more separator layers of the wound parts 25b overlap with each other) is provided. Here, in the lithium ion secondary battery, the negative electrode is damaged more easily than the positive electrode. Moreover, in the negative electrode, the end part, in particular, a corner part of an end part of a negative electrode active material layer is easily damaged. In the illustrated example, as described above, since the size of the negative electrode 24 is larger than that of the positive electrode 23, the end part of the negative electrode 24 protrudes on the side surface of the multilayer body of the positive electrode 23 and the negative electrode 24. Thus, the end part of the negative electrode 24 is protected by the first bent part 25aa and the separator overlap part 25ba, that is, three or more layers of the separators 25 in total, and the damage of the negative electrode 24 (in particular, the end part of the negative electrode 24) can be suppressed more effectively; therefore, the separator overlap part 25ba is desirably provided as described above.

It should be noted that in the illustrated example, since the end part of the negative electrode 24 is damaged more easily in design, the separator overlap part 25ba is provided outside the first bent part 25aa that is folded at the end part of the negative electrode 24. However, the separator overlap part 25ba can be provided outside the second bent part 25ab that is folded at the end part of the positive electrode 23 (outside the extension part 25e). In this case, the damage of the end part of the positive electrode 23 can be suppressed. However, since the second bent part 25ab of the separator 25 can be protected by the extension part 25e and the first bent part 25aa of the separator 25 can be protected by the wound part 25b, it is advantageous that the wound part 25b is disposed outside the first bent part 25aa from the viewpoint of protecting the entire electrode body 20.

In the illustrated example, the number of negative electrodes 24 is larger than the number of positive electrodes 23 by one. Therefore, in the electrode multilayer structure of the positive electrodes 23 and the negative electrodes 24, the outermost layers are the negative electrodes 24 on both sides. Then, the negative electrode 24 that is positioned on one outermost surface in the stacking direction of the positive electrode 23 and the negative electrode 24 is referred to as the outermost negative electrode here. This outermost negative electrode is the negative electrode 24 on the outermost layer on the right side in FIG. 5. This outermost negative electrode is disposed between the zigzag-bent part 25a and the wound part 25b. When the separator 25 includes a base material and a heat resistance layer on a main surface of the base material on the positive electrode 23 side (in this case, the adhesive layer may be further provided on the heat resistance layer), the positive electrode 23 is in contact with the heat resistance layer and the negative electrode is in contact with the base material. When the outermost negative electrode is disposed between the zigzag-bent part 25a and the wound part 25b, the base material of the separator 25 is exposed on the outer surface (in other words, exposed surface) of the electrode body 20. When the base material of the separator 25 is exposed on the outer surface of the electrode body 20 in this manner, the heat resistance layer of the separator 25 can be protected by the base material, which is advantageous.

As illustrated in FIG. 3, in the electrode body 20, the negative electrode current collection tab is positioned at a center of the negative electrode 24 in a direction connecting the first bent part 25aa and the second bent part 25ab of the separator 25 (the Z direction in the drawing). However, the negative electrode current collection tab may deviate away from the separator overlap part 25ba in the direction connecting the first bent part 25aa and the second bent part 25ab of the separator 25 (the Z direction in the drawing). That is to say, the negative electrode current collection tab may deviate on a side closer to the top surface 12c of the case main body 12 relative to the bottom surface 12a of the case main body 12.

Similarly, in the electrode body 20, the positive electrode current collection tab is positioned at a center of the positive electrode 23 in the direction connecting the first bent part 25aa and the second bent part 25ab of the separator 25 (the Z direction in the drawing). However, the positive electrode current collection tab may deviate away from the separator overlap part 25ba in the direction connecting the first bent part 25aa and the second bent part 25ab of the separator 25 (the Z direction in the drawing). That is to say, the positive electrode current collection tab may deviate on a side closer to the top surface 12c of the case main body 12 relative to the bottom surface 12a of the case main body 12.

Here, FIG. 6 is also the cross-sectional view of the case main body 12 that is parallel to the first opening 12e. In the cross section of the case main body 12 that is parallel to the first opening 12e, the inner size of the case main body 12 in a direction where the negative electrode 24 extends (that is, the Z direction in FIG. 6) is referred to as D1, and the size of the negative electrode 24 along the inner size D1 is referred to as W1. D1 and W1 desirably satisfy W1/D1 > 0.9, and more desirably satisfy W1/D1 > 0.95. When W1/D1 is over 0.9 (in particular, over 0.95) in this manner, the large movement of the electrode body 20 inside the battery case 10 can be suppressed, and the damage of the electrode at the vibration or impact of the secondary battery 100 can be suppressed more.

### <Insulating sheet>

As illustrated in FIG. 4 and FIG. 6, the insulating sheet 50 is accommodated inside the battery case 10 together with the electrode body 20. The insulating sheet 50 is disposed between the battery case 10 and the electrode body 20. As shown in the illustrated example, the insulating sheet 50 is desirably disposed on at least an outer surface side of the overlap part 25ba of the separator 25. Thus, the damage of the electrode (in the illustrated example, the negative electrode 24) can be suppressed further. Therefore, even if the weight of the electrode body of the secondary battery 100 is large, the damage of the electrode due to the impact, the vibration, or the like can be suppressed at a high level. In the illustrated example, the insulating sheet 50 covers the periphery of the electrode body 20 (four outer surfaces facing inner surfaces of the case main body 12). Accordingly, the insulating sheet 50 includes a part that is disposed on the outer surface side of the separator overlap part 25ba.

The insulating sheet 50 is formed of an insulating material, and desirably formed of resin. Examples of the resin include: olefin resins such as polyethylene (PE), polypropylene (PP), and polymethyl pentene (PMP/TPX (registered trademark)); polyester resins such as polyethylene terephthalate (PET) and polyethylene naphthalate (PEN); acrylic resin (PMMA); polyimide (PI); polyphenylene ether (PPE); triacetate (TAC); polyphenylene sulfide resin (PPS); polycarbonate (PC); nylon; fluorine resins such as polytetrafluoroethylene (PTFE); and the like. In particular, PE and PP are desirable. It should be noted that the insulating sheet 50 is desirably larger than the separator 25 in thickness.

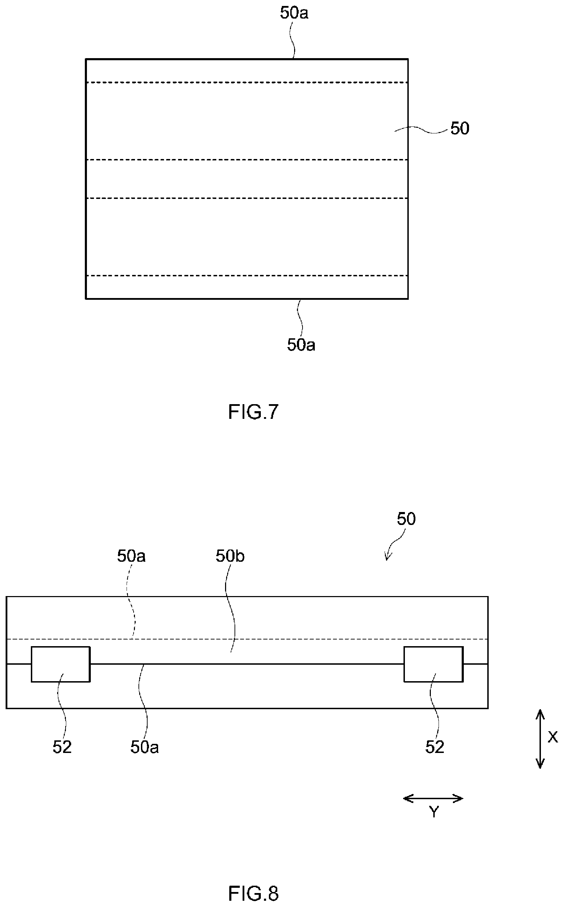

FIG. 7 is a developed view of the insulating sheet 50. FIG. 8 is a diagram of the insulating sheet 50 viewed from a direction of the bottom surface 12a of the battery case 10. In this embodiment, the insulating sheet 50 is formed of one sheet-shaped member. This sheet-shaped member is bent into a rectangular tubular shape to correspond to the shape of the electrode body 20, so that the insulating sheet 50 is configured. As illustrated in FIG. 6 and FIG. 8, there is an overlap part 50b at both end parts 50a in a circumferential direction of the electrode body 20, and in this overlap part 50b, the sheet end parts 50a that are bent overlap with each other. In this insulating sheet 50, the sheet end parts 50a that are bent are fixed together by bonding or the like at this overlap part 50b. In the example illustrated in FIG. 8, the sheet end parts 50a are fixed to each other by a sticky tape 52. The fixing method is not limited to the method using the sticky tape 52, and may employ welding such as thermal welding or ultrasonic welding, adhesion by an adhesive, or the like.

As illustrated in FIG. 8, at the overlap part 50b of the insulating sheet 50, only a part of both end parts 50a of the bent sheet may be fixed. In FIG. 8, near both ends of the overlap part 50b, the sheet end parts 50a are fixed to each other at two positions. The number of positions to be fixed is not limited to this example. For example, the overlap part 50b may be fixed at three positions in total, that is, both ends and a central part thereof. Alternatively, the sheet end parts 50a may be fixed to each other in the entire length of the overlap part 50b.

In the illustrated example, the overlap part 50b of the insulating sheet 50 is disposed outside the separator overlap part 25ba. For example, at least a part of the overlap part 50b of the insulating sheet 50 faces a part of the separator overlap part 25ba. In this case, in the overlap part 50b, since the insulating sheet 50 exists as at least two layers, the end part of the electrode inside the separator overlap part 25ba can be protected at a higher level. Thus, the damage of the end part of the electrode inside the separator overlap part 25ba can be suppressed more effectively. It should be noted that the position of the overlap part 50b of the insulating sheet 50 is not limited to this example, and the overlap part 50b of the insulating sheet 50 may exist at a position that does not face the separator overlap part 25ba.

In the illustrated example, the overlap part 50b of the insulating sheet 50 includes a region where the electrolyte solution and the gas can pass. This case is advantageous from the viewpoints of high impregnation of the electrode body 20 with the electrolyte solution and rapid discharging of the gas from the electrode body 20. The region where the electrolyte solution and the gas can pass can be provided by bonding just a part of the overlap part 50b. That is to say, a part of the overlap part 50b that is not bonded serves as the region where the electrolyte solution and the gas can pass. Alternatively, the region where the electrolyte solution and the gas can pass can be provided by, for example, providing a penetration hole in the insulating sheet while bonding the entire length of the overlap part 50b. When the entire length of the overlap part 50b in an extending direction of the overlap part 50b is L, the region where the electrolyte solution and the gas can pass in the overlap part 50b has a size of desirably 1/5L or more, more desirably 1/3L or more, and still more desirably 1/2L or more. The region where the electrolyte solution and the gas can pass in the overlap part 50b of the insulating sheet 50 may be normally open or may be open upon the reception of stress.

In the illustrated example, the bottom surface 12a of the case main body 12 of the battery case 10 faces the overlap part 50b of the insulating sheet 50. That is to say, the overlap part 50b of the insulating sheet 50 exists on a side of the bottom surface 12a of the case main body 12 of the battery case 10. Thus, since the surplus solution of the electrolyte solution that has not permeated into the electrode body 20 exists on the bottom surface 12a side of the case main body 12 in the battery case 10, the arrangement of the overlap part 50b so as to face the bottom surface 12a is advantageous in supplying this surplus solution to the electrode body 20. Therefore, in this embodiment, the overlap part 50b of the insulating sheet 50 is desirably present on the side where the surplus solution of the electrolyte solution exists. At this time, it is more advantageous that the overlap part 50b of the insulating sheet 50 includes the region where the electrolyte solution can pass. Moreover, in the illustrated example, the overlap part 25ba of the separator 25 faces the bottom surface 12a of the case main body 12 of the battery case 10. Thus, the decrease in the impregnation of the electrode body 20 with electrolyte solution due to three or more separator layers in the overlap part 25ba can be reduced or solved. It should be noted that the overlap part 50b of the insulating sheet 50 may face other surface than the bottom surface 12a of the case main body 12 of the battery case 10.

In the illustrated example, the bottom surface 12a of the case main body 12 of the battery case 10 includes the gas exhaust valve 13. Thus, the gas exhaust valve 13 is provided on a surface facing the overlap part 25ba of the separator 25. Additionally, the gas exhaust valve 13 is provided on a surface of the battery case 10 facing the overlap part 50b of the insulating sheet 50. In this case, in the sudden generation of the gas in the electrode body 20, the gas can be easily released out of the battery case 10 through the gas exhaust valve 13. At this time, it is more advantageous that the overlap part 50b of the insulating sheet 50 includes the region where the gas can pass. It should be noted that the overlap part 50b of the insulating sheet 50 may face the surface of the case main body 12 of the battery case 10 that does not have the gas exhaust valve 13.

Next, the materials of the positive electrode 23, the negative electrode 24, and the separator 25 are described. The positive electrode 23 typically includes a positive electrode current collector, and the positive electrode active material layer fixed on at least one surface of the positive electrode current collector. The positive electrode current collector is formed of a conductive metal such as aluminum, an aluminum alloy, nickel, or stainless steel. The positive electrode current collector is a metal foil here, specifically an aluminum foil. In this embodiment, the positive electrode 23 includes the part where the positive electrode current collector is exposed without the formation of the positive electrode active material layer and this exposed part forms the current collection tab. However, the method of forming the current collection tab is not limited to this method.

The positive electrode active material layer contains the positive electrode active material capable of storing and releasing charge carriers reversibly. As the positive electrode active material, an oxide containing at least one kind of Ni, Co, and Mn is desirable, and examples thereof include lithium transition metal composite oxides such as lithium cobaltate, lithium manganate, lithium nickelate, a lithium nickel manganese composite oxide, and a lithium nickel cobalt manganese composite oxide. The positive electrode active material is more desirably a lithium composite oxide containing Ni (in other words, Ni-containing lithium composite oxide). It is desirable that the Ni content in the Ni-containing lithium composite oxide be in the range of 70 to 100 mol% relative to the total mole of metals excluding Li. It should be noted that in the lithium transition metal composite oxide, a part of Ni, Co, and Mn may be replaced by Al, Ti, Zr, P, B, Si, Nb, C, or the like. Moreover, in the positive electrode active material, a particle surface of the lithium transition metal composite oxide may be covered with a compound containing Al, Ti, Zr, W, P, B, Si, Nb, C, or the like. The replacement amount and the addition amount thereof are about 0.1 to 7 mass% in total. On the other hand, a lithium transition metal phosphate compound such as lithium iron phosphate can also be used as the positive electrode active material. The positive electrode active material layer may contain a conductive material, a binder, or the like. It should be noted that a carbon material such as carbon black or carbon nanotube is desirable as the conductive material. As the binder, a resin binder such as polyvinylidene fluoride is desirable.

The negative electrode 24 typically includes a negative electrode current collector, and a negative electrode active material layer fixed on at least one surface of the negative electrode current collector. The negative electrode current collector is formed of a conductive metal such as copper, a copper alloy, nickel, or stainless steel. The negative electrode current collector is a metal foil here, specifically a copper foil. In this embodiment, the negative electrode 24 includes the part where the negative electrode current collector is exposed without the formation of the negative electrode active material layer and this exposed part forms the current collection tab. However, the method of forming the current collection tab is not limited to this method.

The negative electrode active material layer contains the negative electrode active material capable of storing and releasing charge carriers reversibly. Examples of the negative electrode active material include carbon-based negative electrode active materials such as graphite, hard carbon, and soft carbon, Si-based negative electrode active materials such as Si and silicate, a silicon-carbon composite negative electrode active material, a Sn-based negative electrode active material such as Sn, and the like. The negative electrode active material layer may contain a conductive material, a thickener, a binder, or the like. As the binder, styrene butadiene rubber, carboxymethyl cellulose, or the like is desirably contained.

The separator 25 is a member that insulates between the positive electrode active material layer and the negative electrode active material layer. As the separator 25, for example, a porous resin sheet made of a polyolefin resin such as polyethylene (PE) or polypropylene (PP) is desirable. The porous resin sheet may have either a single-layer structure or a multilayer structure (for example, three-layer structure of PP/PE/PP).

On a surface of the separator 25, an adhesive layer is desirably provided. For example, the adhesive layer contains an adhesive resin such as acrylic resin or polyvinylidene fluoride. If the separator 25 includes the adhesive layer, the layer stacking displacement between the separator 25 and the electrode can be easily suppressed. The adhesive layer may be provided on the entire surface of the separator 25 or may be applied in pattern. For example, the adhesive layer is attached by pressurizing or heating.

On a surface of the separator 25, a heat resistance layer (HRL) including ceramic particles may be provided. As a material of the ceramic particles, for example, alumina, boehmite, aluminum hydroxide, titania, or the like is given. The heat resistance layer desirably further contains a resin binder. The resin binder may be an adhesive resin such as acrylic resin or polyvinylidene fluoride. Adding a suitable amount of resin binder to the heat resistance layer makes it possible for the heat resistance layer to function as the adhesive layer.

In one advantageous embodiment of the separator 25, the separator 25 includes a base material including a microporous film made of polyolefin, and a heat resistance layer and an adhesive layer on a surface of the base material on the side of the positive electrode 23. Specifically, the heat resistance layer is stacked on the base material, and the adhesive layer is stacked on the heat resistance layer. On the other hand, a layer is not stacked on a surface of the base material on the side of the negative electrode 24. Thus, the base material and the negative electrode 24 are in contact with each other directly.

In another embodiment of the separator 25, the separator 25 includes a base material of a porous resin sheet and adhesive layers on both surfaces of the base material. In still another embodiment of the separator 25, the separator 25 includes a base material of the porous resin sheet, an adhesive layer on one surface of the base material, and a heat resistance layer on the other surface of the base material. In this embodiment, the heat resistance layer may have a function of the adhesive layer. In still another embodiment of the separator 25, the separator 25 includes a base material of a porous resin sheet, an adhesive layer on one surface of the base material, a heat resistance layer on the other surface of the base material, and another adhesive layer on this heat resistance layer.

### <Electrolyte solution>

The electrolyte solution is accommodated inside the battery case 10 together with the electrode body 20. The electrolyte solution may be the same as or similar to that in the general secondary battery without particular limitations. The electrolyte solution is typically a nonaqueous liquid electrolyte (that is, nonaqueous electrolyte solution) including a nonaqueous solvent and a supporting salt. Examples of the nonaqueous solvent include carbonates such as ethylene carbonate (EC), ethyl methyl carbonate (EMC), and dimethyl carbonate (DMC). The nonaqueous solvent is desirably formed by mixing EC, EMC, and DMC each within 1 to 99 vol% so that the total ratio becomes 100 vol%. The nonaqueous solvent may further contain carboxylic acid esters such as methyl acetate. The supporting salt is also called an electrolyte salt and is, for example, a fluorine-containing lithium salt. Examples of the fluorine-containing lithium salt include LiPF₆, LiBF₄, and lithium bis(fluorosulfonyl)imide (LiFSI), and the like. The supporting salt desirably contains LiPF₆. The concentration of the supporting salt is not limited in particular and is desirably 0.6 to 1.8 mol/L and more desirably 0.7 to 1.3 mol/L. The electrolyte solution may further contain an additive, specifically, for example, a film formation agent such as vinylene carbonate (VC) or an oxalato complex, a gas generating agent, a thickener, or the like.

In the secondary battery 100, the damage of the electrode due to the impact, the vibration, or the like at the time of manufacture can be suppressed at the high level. The secondary battery 100 is usable in various applications. Suitable applications include the applications for vehicles, specifically a driving power source mounted on a vehicle such as a battery electric vehicle (BEV), a hybrid electric vehicle (HEV), or a plug-in hybrid electric vehicle (PHEV). In addition, the secondary battery 100 can be used as an electrical energy storage battery such as a small electrical energy storage device. The secondary battery 100 can also be used in a mode of a battery module in which a plurality of the secondary batteries 100 are connected in series and/or in parallel typically.

The specific examples of the present disclosure have been described above in detail; however, these are examples and will not limit the scope of claims. The techniques described in the scope of claims include those in which the specific examples exemplified above are variously modified and changed.

That is to say, the following Items [1] to [10] are given as the secondary battery according to the present disclosure.
[1] The secondary battery including: the stacked-type electrode body that includes the plurality of first electrode plates, the plurality of second electrode plates with the polarity different from the polarity of the first electrode plates, and the separator with a band-like shape; and the battery case that accommodates the stacked-type electrode body, in which the separator includes the zigzag-bent part that is bent in a zigzag manner so that the separator is disposed between the first electrode plate and the second electrode plate, and the wound part that is wound to the outer periphery of the part where the first electrode plates, the second electrode plates, and the zigzag-bent part of the separator are stacked, the separator includes the start end part corresponding to the end part of the separator on one side in the longitudinal direction and the terminal end part corresponding to the end part on the other side, the terminal end part is positioned at the winding terminal end of the wound part, the zigzag-bent part includes the first bent part that is disposed on one side in the direction perpendicular to the stacking direction of the first electrode plate and the second electrode plate, and the second bent part that is disposed on the other side in the direction perpendicular to the stacking direction of the first electrode plate and the second electrode plate, the separator includes the extension part that is positioned on the side of the start end part relative to the zigzag-bent part, and disposed between the second bent part and the wound part, and in the stacking direction of the plurality of first electrode plates and the plurality of second electrode plates, the outer surface of one electrode plate of the plurality of first electrode plates and the plurality of second electrode plates that is positioned at one outermost surface side is covered with the separator, and the outer surface of the other electrode plate that is positioned at the other outermost surface side is also covered with the separator.
[2] The secondary battery according to Item [1], further including the insulating sheet, in which the separator overlap part where the wound part overlaps twice or more is provided outside the first bent part, and the insulating sheet is disposed on the outer surface side of the separator overlap part.
[3] The secondary battery according to Item [1] or [2], in which the stacked-type electrode body includes the first electrode tab electrically connected to the first electrode plate at one end part and the second electrode tab electrically connected to the second electrode plate at the other end part, the battery case includes the case main body that includes the first opening at one end part and the second opening at the other end part, the first sealing plate that seals the first opening, and the second sealing plate that seals the second opening, and the first electrode terminal electrically connected to the first electrode plate is provided at the first sealing plate and the second electrode terminal electrically connected to the second electrode plate is provided at the second sealing plate.
[4] The secondary battery according to Item [3], in which in the cross section of the case main body that is parallel to the first opening, the inner size D1 of the case main body in the direction where the first electrode plate extends and the size W1 of the first electrode plate along the inner size D1 satisfy W1/D1 > 0.9.
[5] The secondary battery according to any one of Items [2] to [4], in which the insulating sheet includes the insulating sheet overlap part where the insulating sheet overlaps twice or more, and the insulating sheet overlap part is disposed outside the separator overlap part.
[6] The secondary battery according to Item [5], in which the battery case includes, on the surface that faces the separator overlap part, the gas exhaust valve that fractures when the pressure inside the battery case reaches the predetermined value or more and discharges the gas in the battery case to the outside of the battery case.
[7] The secondary battery according to any one of Items [1] to [6], in which one outermost first electrode plate corresponding to the first electrode plate that is positioned on one outermost surface in the stacking direction of the first electrode plate and the second electrode plate is disposed between the zigzag-bent part and the wound part.
[8] The secondary battery according to any one of Items [1] to [7], in which the first electrode plate includes the first electrode tab, and the first electrode tab deviates, from the center of the first electrode plate, away from the separator overlap part in the direction connecting the first bent part and the second bent part.
[9] The secondary battery according to any one of Items [1] to [8], in which the plurality of electrode bodies are disposed in the battery case, the winding fastening tape is attached to the terminal end part of the separator on the outermost surface of the electrode body, and at least one winding fastening tape is disposed between the plurality of electrode bodies.
[10] The secondary battery according to any one of Items [1] to [9], in which the first electrode plate is the negative electrode plate and the second electrode plate is the positive electrode plate, the separator includes the base material including the microporous film made of polyolefin, and the heat resistance layer and the adhesive layer on the surface of the base material on the side of the positive electrode plate, and the base material and the negative electrode plate are in contact with each other directly.

## Claims

1. A secondary battery (100) comprising:
a stacked-type electrode body (20) that includes a plurality of first electrode plates (23), a plurality of second electrode plates (24) with a polarity different from a polarity of the first electrode plates (23), and a separator (25) with a band-like shape; and
a battery case (10) that accommodates the stacked-type electrode body (20), wherein
the separator (25) includes a zigzag-bent part (25a) that is bent in a zigzag manner so that the separator (25) is disposed between the first electrode plate (23) and the second electrode plate (24), and a wound part (25b) that is wound to an outer periphery of a part where the first electrode plates (23), the second electrode plates (24), and the zigzag-bent part (25a) of the separator (25) are stacked,
the separator (25) includes a start end part (25c) corresponding to an end part of the separator (25) on one side in a longitudinal direction and a terminal end part (25d) corresponding to an end part on the other side,
the terminal end part (25d) is positioned at a winding terminal end of the wound part (25b),
the zigzag-bent part (25a) includes a first bent part (25aa) that is disposed on one side in a direction perpendicular to a stacking direction of the first electrode plate (23) and the second electrode plate (24), and a second bent part (25ab) that is disposed on the other side in the direction perpendicular to the stacking direction of the first electrode plate (23) and the second electrode plate (24),
the separator (25) includes an extension part (25e) that is positioned on a side of the start end part (25c) relative to the zigzag-bent part (25a), and disposed between the second bent part (25ab) and the wound part (25b), and
in the stacking direction of the plurality of first electrode plates (23) and the plurality of second electrode plates (24), an outer surface of one electrode plate of the plurality of first electrode plates (23) and the plurality of second electrode plates (24) that is positioned at one outermost surface side is covered with the separator (25), and an outer surface of the other electrode plate that is positioned at the other outermost surface side is also covered with the separator (25).

2. The secondary battery (100) according to claim 1, further comprising an insulating sheet (50), wherein
a separator overlap part (25ba) where the wound part (25b) overlaps twice or more is provided outside the first bent part (25aa), and
the insulating sheet (50) is disposed on an outer surface side of the separator overlap part (25ba).

3. The secondary battery (100) according to claim 1, wherein
the stacked-type electrode body (20) includes a first electrode tab electrically connected to the first electrode plate (23) at one end part and a second electrode tab electrically connected to the second electrode plate (24) at the other end part,
the battery case (10) includes a case main body (12) that includes a first opening (12e) at one end part and a second opening (12f) at the other end part, a first sealing plate (14) that seals the first opening (12e), and a second sealing plate (16) that seals the second opening (12f), and
a first electrode terminal (30) electrically connected to the first electrode plate (23) is provided at the first sealing plate (14) and a second electrode terminal (40) electrically connected to the second electrode plate (24) is provided at the second sealing plate (16).

4. The secondary battery (100) according to claim 3, wherein in a cross section of the case main body (12) that is parallel to the first opening (12e), an inner size D1 of the case main body (12) in a direction where the first electrode plate (23) extends and a size W1 of the first electrode plate (23) along the inner size D1 satisfy W1/D1 > 0.9.

5. The secondary battery (100) according to claim 2, wherein
the insulating sheet (50) includes an insulating sheet overlap part (50b) where the insulating sheet overlaps twice or more, and
the insulating sheet overlap part (50b) is disposed outside the separator overlap part (25ba).

6. The secondary battery (100) according to claim 5, wherein the battery case (10) includes, on a surface that faces the separator overlap part (25ba), a gas exhaust valve (13) that fractures when pressure inside the battery case (10) reaches a predetermined value or more and discharges a gas in the battery case (10) to outside of the battery case (10).

7. The secondary battery (100) according to claim 1, wherein one outermost first electrode plate (23) corresponding to the first electrode plate (23) that is positioned on one outermost surface in the stacking direction of the first electrode plate (23) and the second electrode plate (24) is disposed between the zigzag-bent part (25a) and the wound part (25b).

8. The secondary battery (100) according to claim 1, wherein
the first electrode plate (23) includes a first electrode tab, and
the first electrode tab deviates, from a center of the first electrode plate (23), away from the separator overlap part (25ba) in a direction connecting the first bent part (25aa) and the second bent part (25ab).

9. The secondary battery (100) according to claim 1, wherein
a plurality of the electrode bodies (20) are disposed in the battery case (10),
a winding fastening tape (26) is attached to a terminal end part (25d) of the separator (25) on an outermost surface of the electrode body (20), and
at least one winding fastening tape (26) is disposed between the plurality of electrode bodies (20).

10. The secondary battery (100) according to claim 1, wherein
the first electrode plate (23) is a negative electrode plate and the second electrode plate (24) is a positive electrode plate,
the separator (25) includes a base material including a microporous film made of polyolefin, and a heat resistance layer and an adhesive layer on a surface of the base material on a side of the positive electrode plate, and
the base material and the negative electrode plate are in contact with each other directly.
